# EUROPÄISCHE PATENTANMELDUNG

(11) **EP 2 302 279 A2**
(43) Veröffentlichungstag der Anmeldung: **30.03.2011**
(21) Anmeldenummer: 10010804.2
(22) Anmeldetag: 27.09.2010
(51) Int. Cl.: F16M 7/00

(54) **Verfahren zur Verankerung eines Maschinenteils in einem Fundament**

(30) Priorität: 28.09.2009 DE 102009043313
(71) Anmelder: SMS Siemag Aktiengesellschaft, 40237 Düsseldorf (DE)
(72) Erfinder: Imiela, Christian, 40227 Düsseldorf (DE); Hertel, Jörg, 57271 Hilchenbach (DE); Runge, Andreas, 42857 Remscheid (DE)
(74) Vertreter: Klüppel, Walter

(57) **Zusammenfassung**

Die Erfindung betrifft ein Verfahren zur Verankerung eines Maschinenteils (1) in einem Fundament (2) mittels mindestens eines im wesentlichen stabförmigen Fundamentankers (3), wobei der Fundamentanker (3) einen ersten Längenabschnitt (L₁) mit einer ersten Breitenabmessung (D) und einen zweiten Längenabschnitt (L₂) mit einer zweiten, kleineren Breitenabmessung (d) aufweist. Um eine gute Verankerung des Fundamentankers bei Verhinderung eines Vorspannverlusts zu gewährleisten, sieht das Verfahren die Schritte vor: a) Anordnen einer Schicht eines Überzugmaterials (4) am Umfang des Fundamentankers (3) im Bereich des zweiten Längenabschnitts (L₂); b) Anordnen des Fundamentankers (3) in einer Bohrung (5) im Fundament (2); c) Befestigen des Fundamentankers (3) im Fundament (2) durch Einbringen eines adhäsiven und/oder aushärtbaren Materials (6) zwischen die Wandung der Bohrung (5) und den Umfang des Fundamentankers (3), wobei das Einbringen des adhäsiven und/oder aushärtbaren Materials (6) im ersten Längenabschnitt (L₁) und zumindest in einem Teil des zweiten Längenabschnitts (L₂) erfolgt; d) Befestigen des im Bereich des zweiten Längenabschnitts (L₂) liegenden axialen Endes des Verbundankers (2) an dem Maschinenteil (1).

## Beschreibung

Die Erfindung betrifft ein Verfahren zur Verankerung eines Maschinenteils in einem Fundament mittels mindestens eines im wesentlichen stabförmigen Fundamentankers, wobei der Fundamentanker einen ersten Längenabschnitt mit einer ersten Breitenabmessung und einen zweiten Längenabschnitt mit einer zweiten, kleineren Breitenabmessung aufweist.

Zur Verankerung eines Maschinenteils in einem Fundament werden Fundamentanker eingesetzt, die im Fundament fest verankert werden; das festzulegende Maschinenteil wird dann am Fundamentanker befestigt. Die JP 55045912 A offenbart eine solche Lösung, wobei hier ein stabförmiger Fundamentanker in einem Fundament mittels eines Bindematerials im Fundament festgelegt ist. Hierzu ist in das Fundament eine Bohrung eingearbeitet, in die der Fundamentanker eingesetzt ist. Dann wird Bindematerial in den Raum zwischen Bohrungswand und Fundamentanker eingegossen. Nach dem Verfestigen des Bindematerials liegt der Fundamentanker im Fundament fest. Eine ähnliche Lösung zeigt die GB 1 368 630. Auch hier wird der Fundamentanker mittels eines Bindematerials in Form von Epoxidharz im Fundament verklebt.

Lösungen, bei denen die Verankerung des Fundamentankers im Fundament mittels mechanischer Elemente erfolgt, sind in der DE 25 24 682 A1, in der DE 23 04 132 A1, in der DE 100 09 072 A1 und in der EP 1 491 814 A2 beschrieben.

Der Fundamentanker muss dabei nicht nur fest im Fundament verankert und fest mit dem zu verankernden Maschinenteil verbunden sein. Es ist auch wichtig, dass der Fundamentanker im Nutzungszustand unter einer gewissen Dehnung steht, um dauerhaft eine Vorspannung sicherzustellen und so das Maschinenteil in definierter Weise verspannt festzulegen. Hierfür ist es erforderlich, eine definierte Längenerstreckung im Fundamentanker zwischen dem festzementierten bzw. festgeklebten Bereich des Fundamentankers und dem Bereich zu schaffen, der mit dem Maschinenteil verbunden ist.

Bei den vorbekannten Lösungen, die einen im Fundament festzementierten bzw. festgeklebten Fundamentanker vorsehen, kann nicht zuverlässig sichergestellt werden, dass ein hinreichender Dehnbereich des Fundamentankers vorliegt, so dass dieser nach Art einer Dehnschraube dauerhaft wirksam werden kann.

Der vorliegenden Erfindung liegt daher die **Aufgabe** zugrunde, ein Verfahren der eingangs genannten Art so fortzubilden, dass sichergestellt wird, dass ein definierter Abschnitt des Fundamentankers auch nach dem Einzementieren bzw. nach dem Einkleben des Fundamentankers im Fundament als Dehnbereich erhalten bleibt. Auf diese Weise soll im Nutzungszustand des Fundamentankers ständige Vorspannung im Fundamentanker sichergestellt werden.

Die **Lösung** dieser Aufgabe durch die Erfindung zeichnet sich bei einem Fundamentanker der eingangs genannten Art durch die folgenden Verfahrensschritte aus:
a) Anordnen einer Schicht eines Überzugmaterials am Umfang des Fundamentankers im Bereich des zweiten Längenabschnitts;
b) Anordnen des Fundamentankers in einer Bohrung im Fundament;
c) Befestigen des Fundamentankers im Fundament durch Einbringen eines adhäsiven und/oder aushärtbaren Materials zwischen die Wandung der Bohrung und den Umfang des Fundamentankers, wobei das Einbringen des adhäsiven und/oder aushärtbaren Materials im ersten Längenabschnitt und zumindest in einem Teil des zweiten Längenabschnitts erfolgt;
d) Befestigen des im Bereich des zweiten Längenabschnitts liegenden axialen Endes des Verbundankers an dem Maschinenteil.

Das Einbringen des adhäsiven und/oder aushärtbaren Materials gemäß obigem Schritt c) erfolgt dabei vorzugsweise über die weitgehende Erstreckung des zweiten Längenabschnitts; hierunter kann insbesondere verstanden werden, dass das Einbringen des Materials über mindestens 70% der Erstreckung des zweiten Längenabschnitts erfolgt.

Zumindest einer, vorzugsweise beide Längenabschnitte des Fundamentankers sind vorzugsweise zylindrisch ausgebildet.

Als Überzugmaterial kann Kunststoff verwendet werden. Das Anordnen einer Schicht eines Überzugmaterials gemäß obigem Schritt a) kann die Umhüllung oder Umwicklung des zweiten Längenabschnitts mit einer Folie umfassen.

Als aushärtbares Material wird bevorzugt Zement oder Epoxidharz verwendet.

Der Übergang zwischen dem ersten Längenabschnitt und dem zweiten Längenabschnitt kann kegelförmig bzw. konisch ausgebildet sein, um Spannungsspitzen zu vermeiden.

Der Fundamentanker ist zumeist einseitig mit einem Gewinde versehen, um das festzulegende Maschinenteil zu befestigen.

Der erfindungsgemäße Vorschlag kommt einerseits dann zum Einsatz, wenn es um die Installation einer Anlage geht, in deren Zusammenhang ein Maschinenteil erstmalig an einem Fundament festgelegt werden muss. Andererseits kommt das Verfahren genauso zum Einsatz, wenn bei Schadensfällen ein vorhandener Fundamentanker ersetzt werden muss.

Nach dem Erfindungskonzept kommt ein Fundamentanker mit mindestens zwei Längenabschnitten zum Einsatz. Der eine Längenabschnitt dient zum Festlegen des Fundamentankers im Fundament, was durch eine klebende bzw. aushärtende Masse (Klebstoff, Zement) erfolgt. Der andere Längenabschnitt dient zur Schaffung einer Dehnung, d. h. dieser Bereich soll nach Art einer Dehnschraube arbeiten. Um den Verankerungsprozess, d. h. das Einkleben bzw. Einzementieren des Fundamentankers möglichst einfach zu gestalten, wird der Fundamentanker praktisch über seine gesamte Länge im Fundament fixiert. Damit der Bereich des Fundamentankers, der zur Schaffung der Dehnung genutzt werden soll, nicht mit dem Fundament verbunden wird, wird dieser Abschnitt vor dem Befestigen des Fundamentankers im Fundament mit einem (gleitfähigen) Material versehen, z. B. mit einer Kunststofffolie umwickelt, der die Schaffung einer festen Verbindung zwischen Fundamentanker und Fundament verhindert. Demgemäß bleibt dieser Abschnitt als freie dehnbare Länge des Fundamentankers als nicht verbundener Bereich zur Herstellung der genannten Dehnung zur Verfügung.

So kann einem Vorspannungsverlust im Nutzungszustand des Fundamentankers zuverlässig entgegengewirkt werden.

Das vorgeschlagene Verfahren ermöglicht eine sehr einfache Vorgehensweise bei der Montage des Fundamentankers, da keine besondere Sorgfalt bei der Definition der Menge an adhäsivem bzw. aushärtbarem Material an den Tag gelegt werden muss, das zwischen Bohrungswandung im Fundament und Fundamentanker eingegeben werden muss. Vielmehr wird unabhängig von der genauen Menge an Klebstoff / Zement, der zur Festlegung des Fundamentankers eingefüllt wird, eine reproduzierbare Dehnungseigenschaft des Fundamentankers sichergestellt.

In der Zeichnung ist ein Ausführungsbeispiel der Erfindung dargestellt. Es zeigen:
- Fig. 1: schematisch einen Fundamentanker in der Seitenansicht,
- Fig. 2: den Fundamentanker gemäß Fig. 1, wobei dieser mit einem Überzugs- material versehen ist,
- Fig. 3: ein Fundament mit einer Bohrung, in die der Fundamentanker gemäß Fig. 2 eingesetzt ist,
- Fig. 4: den Fundamentanker in der Bohrung des Fundaments, wobei nunmehr ein aushärtbares Material zwischen Bohrungswand und Fundamentan- ker eingebracht wurde, um den Fundamentanker mit dem Fundament zu verbinden, und
- Fig. 5: den im Fundament festgelegten Fundamentanker, wobei dieser nach Entfernen des Überzugsmaterials mit einem Maschinenteil verbunden ist.

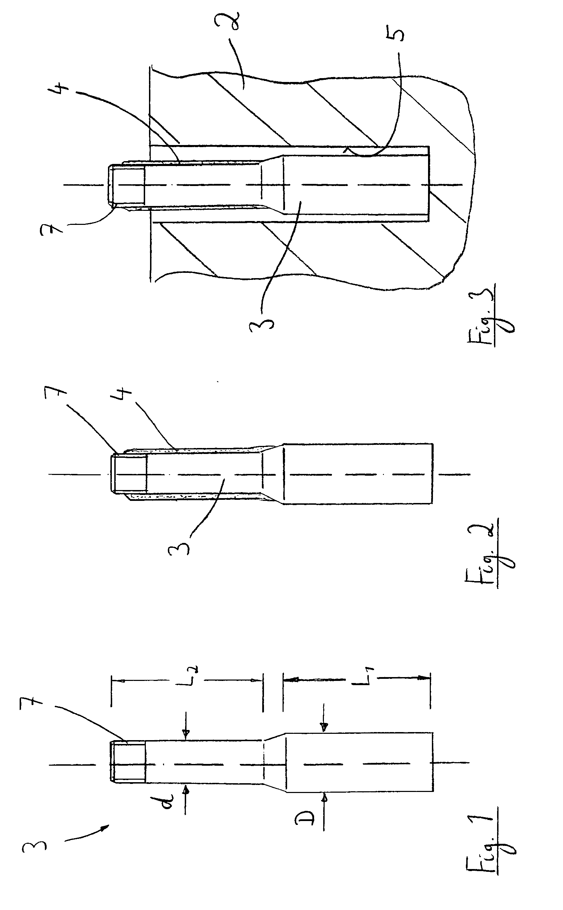

In Fig. 1 ist ein Fundamentanker 3 dargestellt, der im Wesentlichen stabförmig ausgebildet ist. Er besteht aus zwei Längenbereichen L₁ und L₂, die sich jeweils über eine gewisse Längenerstreckung des Fundamentankers 3 ausdehnen. Im Längenabschnitt L₁ hat der Fundamentanker 3 einen ersten Durchmesser D, im Längenabschnitt L₂ hat er einen Durchmesser d, der geringer ist als der Durchmesser D. Der Durchmesser d beträgt dabei bevorzugt zwischen 40% und 75% des Durchmessers D.

Der in Fig. 1 unten liegende Bereich L₁ des Fundamentankers 3 dient dazu, in einem Fundament befestigt zu werden. Der oben liegende Bereich L₂ ist vorgesehen, um eine freie dehnbare Länge des Fundamentankers 3 zu bilden. Das oben liegende axiale Ende des Fundamentankers 3 ist demgemäß zur Verbindung mit einem Maschinenteil ausgebildet und vorgesehen. Hier ist zu diesem Zweck ein Gewinde 7 eingearbeitet.

Der Übergang zwischen den beiden Längenabschnitten L₁ und L₂ ist konisch ausgebildet, um Spannungsspitzen im Material bei der Zugkrafteinleitung in den Fundamentanker 3 möglichst gering zu halten.

Bei der Montage des Fundamentankers 3 gemäß Fig. 1 wird zunächst - wie es in Fig. 2 zu sehen ist - der Längenabschnitt L₂ mit einem Überzugsmaterial 4 versehen. Hierbei kann es sich um eine Kunststofffolie handeln, die um den Bereich L₂ gewickelt wird, wie es aus Fig. 2 hervorgeht. Wesentlich ist, dass es das Überzugsmaterial 4 beim späteren Befestigen des Fundamentankers 3 durch einen Klebstoff bzw. ein Zementmaterial verhindert, dass ein fester Verbund zwischen dem zweiten Längenabschnitt L₂ des Fundamentankers 3 und dem Fundament entsteht.

Der gemäß Fig. 2 präparierte Fundamentanker 3 wird nunmehr in eine Bohrung 5 in einem Fundament 2 eingesetzt, wie es aus Fig. 3 hervorgeht.

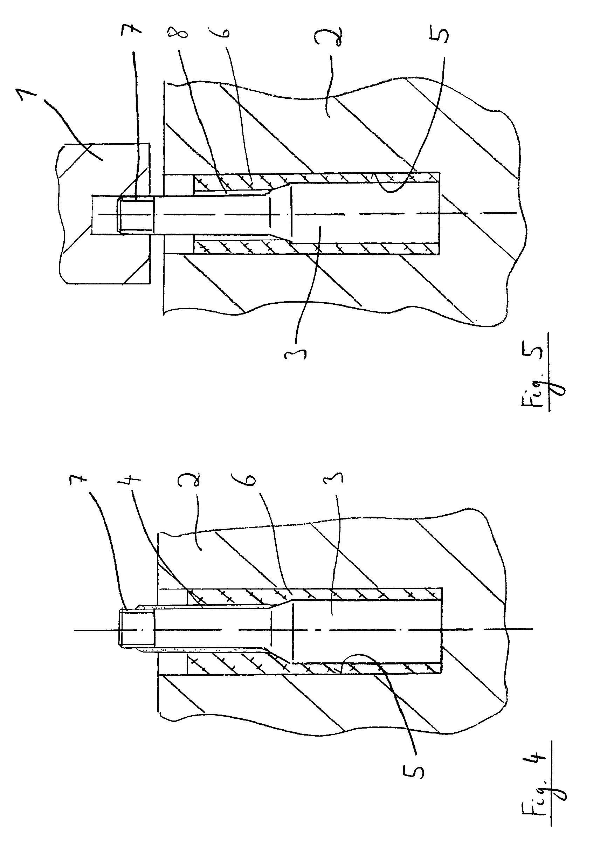

Zwischen der Wandung der Bohrung 5 und dem Außenumfang des Fundamentankers 3 verbleibt ein Raum, der zur Aufnahme eines adhäsiven bzw. aushärtbaren Materials 6 tauglich ist. Dieses Material 6 wird nach der Platzierung des präparierten Fundamentankers 3 in der Bohrung 5 eingegossen, wie es Fig. 4 zeigt. Der untere Bereich des Fundamentankers 3, d. h. der Längenabschnitt L₁, wird auf diese Weise fest im Fundament 2 befestigt. Dies gilt indes nicht für den oberen Längenabschnitt L₂, da dies durch das Überzugsmaterial 4 verhindert wird.

Ist das Material 6 ausgehärtet und so ein fester Verbund zwischen dem Längenabschnitt L₁ des Fundamentankers 3 und dem Fundament 2 hergestellt, kann das Überzugsmaterial 4 entfernt werden, wie es Fig. 5 zeigt. Es verbleibt ein Spalt 8 zwischen dem ausgehärteten Material 6 und dem Längenabschnitt L₂ des Fundamentankers 3, so dass der Längenabschnitt L₂ als Dehnbereich des Fundamentankers 3 fungieren kann. Am oberen Ende des Fundamentankers 3 wird schließlich das festzulegende Maschinenteil 1 befestigt, wozu vorliegend das Gewinde 7 dient.

### Bezugszeichenliste:

- 1: Maschinenteil
- 2: Fundament
- 3: Fundamentanker
- 4: Überzugmaterial
- 5: Bohrung
- 6: adhäsives und/oder aushärtbares Material
- 7: Gewinde
- 8: Spalt

- L₁: erster Längenabschnitt
- L₂: zweiter Längenabschnitt
- D: Durchmesser
- d: Durchmesser

## Patentansprüche

1. Verfahren zur Verankerung eines Maschinenteils (1) in einem Fundament (2) mittels mindestens eines im wesentlichen stabförmigen Fundamentankers (3), wobei der Fundamentanker (3) einen ersten Längenabschnitt (L₁) mit einer ersten Breitenabmessung (D) und einen zweiten Längenabschnitt (L₂) mit einer zweiten, kleineren Breitenabmessung (d) aufweist, wobei das Verfahren die Schritte aufweist:
a) Anordnen einer Schicht eines Überzugmaterials (4) am Umfang des Fundamentankers (3) im Bereich des zweiten Längenabschnitts (L₂);
b) Anordnen des Fundamentankers (3) in einer Bohrung (5) im Fundament (2);
c) Befestigen des Fundamentankers (3) im Fundament (2) durch Einbringen eines adhäsiven und/oder aushärtbaren Materials (6) zwischen die Wandung der Bohrung (5) und den Umfang des Fundamentankers (3), wobei das Einbringen des adhäsiven und/oder aushärtbaren Materials (6) im ersten Längenabschnitt (L₁) und zumindest in einem Teil des zweiten Längenabschnitts (L₂) erfolgt; und
d) Befestigen des im Bereich des zweiten Längenabschnitts (L₂) liegenden axialen Endes des Verbundankers (2) an dem Maschinenteil (1).

2. Verfahren nach Anspruch 1,
**dadurch gekennzeichnet,**
**dass** das Einbringen des adhäsiven und/oder aushärtbaren Materials (6) gemäß Schritt c) von Anspruch 1 über die weitgehende Erstreckung des zweiten Längenabschnitts (L₂) erfolgt.

3. Verfahren nach Anspruch 2,
**dadurch gekennzeichnet,**
**dass** das Einbringen des adhäsiven und/oder aushärtbaren Materials (6) gemäß Schritt c) von Anspruch 1 über mindestens 70% der Erstreckung des zweiten Längenabschnitts (L₂) erfolgt.

4. Verfahren nach einem der Ansprüche 1 bis 3,
**dadurch gekennzeichnet,**
**dass** zumindest einer, vorzugsweise beide Längenabschnitte (L₁, L₂) des Fundamentankers (3) zylindrisch ausgebildet sind.

5. Verfahren nach einem der Ansprüche 1 bis 4,
**dadurch gekennzeichnet,**
**dass** als Überzugmaterials (4) ein Kunststoff verwendet wird.

6. Verfahren nach einem der Ansprüche 1 bis 5,
**dadurch gekennzeichnet,**
**dass** der Schritt des Anordnens einer Schicht eines Überzugmaterials (4) gemäß Schritt a) von Anspruch 1 die Umhüllung oder Umwicklung des zweiten Längenabschnitts (L₂) mit einer Folie umfasst.

7. Verfahren nach einem der Ansprüche 1 bis 6,
**dadurch gekennzeichnet,**
**dass** als aushärtbares Material (6) Zement verwendet wird.

8. Verfahren nach einem der Ansprüche 1 bis 6,
**dadurch gekennzeichnet,**
**dass** als aushärtbares Material (6) Epoxidharz verwendet wird.

9. Verfahren nach einem der Ansprüche 1 bis 8,
**dadurch gekennzeichnet,**
**dass** der Übergang zwischen dem ersten Längenabschnitt (L₁) und dem zweiten Längenabschnitt (L₂) kegelförmig ausgebildet ist.

10. Verfahren nach einem der Ansprüche 1 bis 9,
**dadurch gekennzeichnet,**
**dass** der Fundamentanker (3) einseitig mit einem Gewinde (7) versehen ist.
